# EUROPÄISCHE PATENTSCHRIFT

(11) **EP 1 098 551 B1**
(45) Veröffentlichungstag und Bekanntmachung des Hinweises auf die Patenterteilung: **02.04.2008**
(21) Anmeldenummer: 00120691.1
(22) Anmeldetag: 22.09.2000
(51) Int. Cl.: H05B 37/04, H05B 37/03

(54) **Verfahren und Vorrichtung zur Überwachung des von einer Beleuchtungsvorrichtung abgestrahlten Lichtes für ein optisches Messgerät**
Method and apparatus for monitoring the light emitted by a light source in an optical measuring device
Dispositif et procédé pour surveiller la lumière émise par une source lumineuse d'un appareil de mesure optique

(30) Priorität: 05.11.1999 DE 19953290
(43) Veröffentlichungstag der Anmeldung: 09.05.2001
(73) Patentinhaber: Vistec Semiconductor Systems Jena GmbH, 07745 Jena (DE)
(72) Erfinder: Wienecke, Joachim, Dr., 07747 Jena (DE); Wolter, Detlef, 07751 Jena-Wogau (DE); Jaritz, Horst-Dieter, 07751 Drackendorf (DE); Backhaus, Kuno, 07751 Zöllnitz (DE); Slodowski, Matthias, 07743 Jena (DE)
(74) Vertreter: Reichert, Werner Franz

(56) Entgegenhaltungen:
- EP-A- 0 833 548
- FR-A- 2 663 184
- US-A- 3 781 853
- US-A- 5 019 769
- US-A- 5 274 611
- US-A- 5 495 329
- US-A- 5 909 090
- PATENT ABSTRACTS OF JAPAN vol. 014, no. 241 (E-0931), 22. Mai 1990 (1990-05-22) & JP 02 066892 A (HOYA CORP), 6. März 1990 (1990-03-06)

## Beschreibung

Die Erfindung bezieht sich auf ein Verfahren zur Überwachung des von einer Beleuchtungsvorrichtung abgestrahlten Lichtes sowie auf eine Vorrichtung zur Ausübung dieses Verfahrens.

Derartige Verfahren bzw. Vorrichtungen finden überall dort Anwendung, wo aus Genauigkeitsgründen die Werte des von der Beleuchtungsvorrichtung abgestrahlten Lichtes, beispielsweise die Helligkeit, Schwankungen der Helligkeit, Spektraleigenschaften und dergleichen in engen Parameterbereichen gehalten werden müssen. Dies ist insbesondere bei optischen Meßgeräten wie beispielsweise zur Schichtdickenbestimmung der Fall, bei denen aus Veränderungen des Meßlichtes, die durch ein Meßobjekt verursacht sind, Rückschlüsse auf die Eigenschaften und/oder die Maßhaltigkeit des Meßobjektes gezogen werden.

Bei Geräten, die zur Maßhaltigkeitskontrolle in kontinuierlichen Fertigungslinien eingesetzt werden, beispielsweise bei der Herstellung von Wafern in der Halbleiterproduktion, ist eine hohe Zuverlässigkeit von Bedeutung, da auf der Grundlage der Meßergebnisse Aussagen über die Produktqualität sowie die Stabilität des Produktionsprozesses gewonnen werden. Dabei ist eine stabile Genauigkeit der verwendeten Meßgerätetechnik erforderlich.

Grundsätzlich hängt die Meßgenauigkeit bei Geräten, die nach optischen Prinzipien arbeiten, in erheblichem Maße von gleichbleibenden Parametern des Meßlichtes ab, das in einer Beleuchtungsvorrichtung erzeugt wird. Bei den dazu überlicherweise verwendeten Lampen verändern sich jedoch mit zunehmender Betriebsdauer die Eigenschaften des abgestrahlten Lichtes, so daß diese Lampen aufgrund ihrer Alterung für Meßzwecke ungeeignet werden. Aus ökonomischen Gründen ist man jedoch bestrebt, die Lampen so lange wie möglich zu verwenden, ohne dabei jedoch Meßungenauigkeit zuzulassen. Oftmals ist es auch aus Sicherheitsgründen nicht erwünscht, Lampen nach Ablauf einer maximal zulässigen Betriebsdauer noch weiter zu verwenden.

Diesbezüglich ist aus dem Stand der Technik bisher lediglich bekannt, den Ausfall einer Lampe zu erfassen und daraufhin einen Lampenaustausch vorzunehmen. Dies ist beispielsweise in der Patentschrift US 3,562,580 A beschrieben, die sich auf eine Projektionsvorrichtung bezieht.

Weiterhin ist aus der Patentschrift US 4,831,564 A bekannt, die verbleibende Lebensdauer einer Xenonlampe anhand des aktuellen Entladungsstromes abzuschätzen. Dabei wird auf eine vorgegebene Beziehung zwischen dem Entladungsstrom und der Lebensdauer zurückgegriffen, so daß anhand des gerade erfaßten Entladungsstroms eine theoretische Restbetriebsdauer bestimmt werden kann. Da dieses Verfahren keinerlei Überprüfung der Qualität des von der Lampe abgestrahlten Lichtes erlaubt, ist es für den Einsatz bei einer Beleuchtungsvorrichtung zur Erzeugung von Meßlicht innerhalb enger Qualitätsgrenzen ungeeignet.

Weiterhin weist die Patentschrift US 5,495,329 A auf eine Beleuchtungsvorrichtung für einen Scanner hin, die bei Inbetriebnahme des Scanners das von einer Lampe abgestrahlte Licht auf Vorhandensein verschiedener Eigenschaften untersucht, wobei vor allem eine hohe Gleichmäßigkeit der Leuchtdichte über einen abzuscannenden Bereich von Bedeutung ist. Überdies werden anhand der erforderlichen Aufwärmzeiten der Lampe Informationen über den Alterungszustand derselben gewonnen, woraus dann Voraussagen über die verbleibende Nutzungsdauer gewonnen werden. Auch in diesem Fall lassen sich jedoch keine zuverlässigen Aussagen über die Qualität des Meßlichtes oder einen idealen Zeitpunkt zum Wechsel der Lampen ableiten.

Das U.S. Patent 5,274,611 offenbart eine Vorrichtung und ein Verfahren zur Bestimmung der bereits abgelaufenen Zeit der Lebensdauer einer Quecksilberdampflampe. Dazu wird die Anschaltzeit der Quecksilberdampflampe gemessen und die Nutzungszeiten der Quecksilberdampflampe werden aufsummiert. Auf einem Display wird dem Benutzer die aufsummierte Brenndauer der Quecksilberdampflampe angezeigt. Anhand dieser Information kann der Benutzer abschätzen, wie lange die Quecksilberdampflampe für Experimente noch zur Verfügung steht.

Das U.S. Patent 3,781,853 offenbart ein Navigationslichtsystem. Dabei sind mehrere Lampen auf einem Revolver angeordnet, der, wenn eine Lampe ausgebrannt ist, eine neue Lampe in den Strahlengang schwenken kann. Ferner ist eine Schaltung vorgesehen, mit der festgestellt werden kann, ob eine Lampe ausgebrannt ist.

Der Erfindung liegt davon ausgehend die Aufgabe zugrunde, eine kostengünstige Möglichkeit zur Bereitstellung eines in seinen Eigenschaften über lange Zeiträume gleichbleibenden Meßlichtes zu schaffen.

Diese Aufgabe wird gelöst durch ein Verfahren zur Überwachung des von einer Beleuchtungsvorrichtung abgestrahlten Lichtes für ein optisches Meßgerät, bei dem die Beleuchtungsvorrichtung mehrere Lampen aufweist, die einzeln oder in Gruppen ein- bzw. ausschaltbar sind, eine fortlaufende und/oder zeitweise Erfassung von Lampen- und/oder Meßlichtparametern erfolgt und die erfaßten Parameter mit hierauf bezogenen vorgegebenen Sollwerten verglichen werden, wobei ein über eine bestimmte Toleranzgrenze hinausgehendes Abweichen eines oder mehrerer der erfaßten Parameter von den entsprechenden Sollwerten signalisiert und daraufhin ein Wechsel der Lampe bzw. Lampengruppe vorgenommen wird.

Hierdurch läßt sich der optimale Zeitpunkt für einen Lampenwechsel bestimmen, der einen Kompromiß zwischen der maximalen Lebensdauer der Lampen und der für ein Meßgerät erforderlichen Güte des Meßlichtes erlaubt. Die fortlaufende Erfassung von Lampen- und/oder Meßlichtparametern, vorzugsweise derjenigen Parameter, die auch in dem optischen Gerät ausgelesen werden, kann bereits während eines Meßvorganges vorgenommen werden, so daß im Bedarfsfalle sofort ein Lampenwechsel veranlaßt werden kann und auf diese Weise eine hohe Verfügbarkeit eines Meßlichtes in den gewünschten Toleranzbereichen gewährleistet ist.

Dies ist gerade bei Fertigungslinien mit hohem Durchsatz von entscheidender Bedeutung, um den Produktionsausschuß gering zu halten. In einer vorteilhaften Ausgestaltung der Erfindung werden als Meßlichtparameter die Helligkeit bzw.

Intensität des Meßlichtes, die Häufigkeit von Helligkeits- bzw. Intensitätsschwankungen sowie dessen Spektralverteilung erfaßt. Damit eignet sich das Verfahren vor allem für eine Beleuchtungsvorrichtung, die im Zusammenhang mit spektroskopischen Meßverfahren, beispielsweise einer optischen Schichtdickenmessung, eingesetzt wird.

Die Brenndauer von in Beleuchtungseinrichtungen eingesetzten Lampen, beispielsweise Halogenlampen, Xenonlampen oder Deuteriumlampen ist konstruktionsbedingt zeitlich beschränkt. Von den Herstellern garantierte Lebensdauern liegen für die genannten Lampen im Bereich von 1000 Stunden und darüber. In diesem Zusammenhang wird in einer weiteren vorteilhaften Ausgestaltung der Erfindung zwecks Gewährleistung einer hohen Gleichmäßigkeit des Meßlichtes die Brenndauer jeder Lampe aufsummiert und das Erreichen einer vorgegebenen Brenndauer signalisiert, woraufhin dann ein Wechsel der Lampe bzw. einer Lampengruppe vorgenommen wird.

Hierdurch kann insbesondere auch einer gegen Ende der Lebensdauer der Lampe ansteigenden Explosionsgefahr vorgebeugt werden. Ungeachtet dessen ist es weiterhin vorteilhaft, die Beleuchtungsvorrichtung auch auf den Totalausfall einer Lampe zu überwachen und einen solchen zu signalisieren, um daraufhin umgehend einen Wechsel der defekten Lampe bzw. Lampengruppe auszulösen.

Zur Vereinfachung des Überwachungsregimes kann die Kontrolle des Totalausfalls einer Lampe bzw. Lampengruppe und/oder eine Kontrolle der Brenndauer mit einem lampennahen Photodetektor vorgenommen werden, so daß sich eine Störungsaussage mit einer besonders hohen Zuverlässigkeit treffen läßt. Überdies bleibt der Überwachungsaufwand für die genannten Kriterien gering. Zudem ist eine verfahrenstechnische Entkopplung von aus Meßlichtparameterabweichungen resultierenden Störungsmeldungen möglich. Auch die Überwachung des Lampenstromes ist denkbar, um einen Totalausfall ermitteln zu können.

In einer weiteren vorteilhaften Ausgestaltung des erfindungsgemäßen Verfahrens wird nach dem Signalisieren einer Meßlichtparameterabweichung eine Kontrollmeßung vorgenommen, um Beeinträchtigungen des Meßlichtes, die nicht durch die Lampen verursacht sind, ermitteln und gegebenenfalls ausschalten zu können. Damit wird ein unwirschaftlicher vorzeitiger Lampenwechsel vermieden. Für die Kontrollmessung erfolgt zunächst eine Kalibrierung am optischen Meßgerät mit den ohnehin vorhandenen optischen Meßbaugruppen. Ein Wechsel der Lampe bzw. Lampengruppe wird lediglich erst dann vorgenommen, wenn trotz erfolgter Kalibrierung weiterhin eine Abweichung von den vorgegebenen Parameterbereichen signalisiert wird.

Vorzugsweise erfolgt die Kalibrierung auf Basis des Abgleichs eines bekannten Spektrums eines Referenzkörpers, das beispielsweise in einer Datenverarbeitungsvorrichtung abgespeichert ist, mit einem von dem Referenzkörper beeinflußten Meßlichtspektrum. Diese Vorgehensweise eignet sich besonders für ein Schichtdickenmeßgerät, beispielsweise ein Spektralphotometer oder Spektralellipsometer, bei dem die vorgenannte Kalibrierung mit geringem Aufwand gegebenenfalls auch vollautomatisch durchgeführt werden kann.

In einer weiteren vorteilhaften Ausgestaltung wird alternativ oder auch in Ergänzung zu dem vorgenannten Kalibriervorgang eine weitere Kontrollmessung vorgenommen, bei der das optische Meßgerät mit einem Referenzkörper bekannter Schichtdicke kalibriert wird, indem der aus der Beeinflussung des Meßlichtes abgeleitet Schichtdickenwert mit der bekannten Schichtdicke des Referenzkörpers abgeglichen wird. Lediglich bei einem Weiterbestehen der Abweichung der Meßlichtparameter von den vorgegebenen Parameterbereichen wird dann ein Wechsel der Lampe bzw. Lampengruppen ausgelöst. Andernfalls können die gerade in Betrieb befindlichen Lampen bzw. Lampengruppen weiter verwendet werden, so daß mit der vorgenannten Vorgehensweise einem unnötig frühen Wechsel der Lampen vorgebeugt, aber auch eine hohe Gleichmäßigkeit des Meßlichtes an der Meßstelle und folglich eine hohe Meßgenauigkeit des optischen Meßgerätes gewährleistet wird.

Um den verfahrenstechnischen Aufwand zu begrenzen und zu einer besonders einfachen Durchführung der Meßlichtüberwachung zu gelangen erfolgt die Erfassung von Lampen- und/oder Meßlichtparametern gleichzeitig oder im Wechsel mit der Ausübung der Meßaufgabe, für welche das optische Meßgerät ausgebildet ist, wobei mindestens eine der Baugruppen, die der Ausübung der Meßaufgabe dienen, auch zur Erfassung bzw. Überwachung der Lampen- und/oder Meßlichtparametern verwendet wird.

In einer weiteren vorteilhaften Ausgestaltung des Verfahrens erfolgt der Wechsel der Lampe bzw. Lampengruppen selbsttätig. Damit eignet sich die Beleuchtungsvorrichtung besonders für die Verwendung in kontinuierlich betriebenen Meßgeräten, die beispielsweise in einer Serienfertigungslinie eingesetzt werden. Der zu einer Beibehaltung einer hohen Meßlichtgüte erforderliche Wechsel der Lampen kann dann gegebenenfalls vollständig ohne den Eingriff von Betriebspersonal vorgenommen werden, so daß sich für den Produktionsvorgang keine oder allenfalls minimale Zeitverzögerungen ergeben. Auch läßt sich hierdurch die Wechselzeit für die Lampen gering halten.

Die der Erfindung zugrundliegende Aufgabe wird weiterhin gelöst mit einer Beleuchtungsvorrichtung für ein optisches Meßgerät, insbesondere für ein Schichtdickenmeßgerät, umfassend mehrere als Meßlichtquelle dienende Lampen, von denen mindestens eine zur Ausübung der nächstfolgenden Meßaufgabe vorgesehen ist, während die übrigen als Lampenvorrat dienen; eine ein- und ausschaltbare Betriebsspannungsquelle, die über Kontakte mit der mindestens einen als Meßlichtquelle dienenden Lampe verbunden ist; eine ansteuerbare Einrichtung zur wahlweisen Zuführung der Lampen zu den Kontakten; Einrichtungen zur fortlaufenden und/oder zeitweisen Erfassung von Lampen- und/oder Meßlichtparametern; Einrichtungen zur Vorgabe von den jeweiligen Parametern zugeordneten Sollwerten sowie eine Vergleichseinrichtung, die bei einem Abweichen eines oder mehrerer der erfaßten Meßlichtparameter von den entsprechenden Sollwerten ein die Abweichung repräsentierendes Signal erzeugt und dieses Signal an eine Ansteuerschaltung weitergibt, die mit der Zuführeinrichtung in Verbindung steht.

Damit ergeben sich die bereits im Zusammenhang mit dem erfindungsgemäßen Verfahren beschriebenen Vorteile.

In einer vorteilhaften Ausgestaltung dieser Beleuchtungsvorrichtung ist die Zuführeinrichtung als drehbare Trommel ausgebildet, an deren Umfang in radialsymmetrischen Abständen die Lampen angeordnet sind; die Kontakte stehen im radialen Eingriff mit mindestens einer dieser Lampen und die Trommel ist mit einem Antrieb gekoppelt, der in Abhängigkeit von einem Stellsignal die Drehung der Trommel soweit veranlaßt, bis die mit den Kontakten in Eingriff stehende Lampe gewechselt ist.

Diese Lösung ermöglicht eine besonders kompakte Bauweise eines Lampenwechslers, an dem eine größere Zahl von Lampen bzw. Lampengruppen vorgesehen werden kann, so daß nach Ende der Betriebsdauer einer Lampe bzw. Lampengruppe die Trommel lediglich von einer Position in die nächste geschaltet werden muß, ohne daß Lampen ein- oder ausgebaut werden müssen. Erst wenn sämtliche Lampen verbraucht sind, ist eine Neubestückung der Trommel mit Lampen erforderlich.

Die Anordnung der elektrischen Kontakte der einzelnen Lampen bzw. Lampengruppen radial außenseitig ermöglicht zudem eine erhebliche Vereinfachung der Stromzufuhr, die über eine einzige Anschlußvorrichtung erfolgen kann.

Zur Vereinfachung des Wechsels der Lampen durch eine Drehung der Trommel ist die elektrische Anschlußeinrichtung in Bezug auf die Drehachse radial hin- und herbewegbar ausgebildet, so daß Beschädigungen der elektrischen Kontakte insbesondere an der elektrischen Anschlußeinrichtung bei einem Wechselvorgang zuverlässig vermieden werden.

Die Erfindung wird nachfolgend anhand eines Ausführungsbeispieles näher erläutert. Dabei zeigen die zugehörigen Zeichnungen in
- Fig.1: die schematische Darstellung eines auf dem Prinzip der Spektralphotometrie beruhenden Schichtdickenmeßgerätes mit einer Beleuchtungsvorrichtung nach der Erfindung,
- Fig.2: die perspektivische Ansicht eines Lampenwechslers der Beleuchtungsvorrichtung und
- Fig.3: einen Ablaufplan zur Überprüfung des Meßlichtes einer Beleuchtungsvorrichtung für ein optisches Meßgerät.

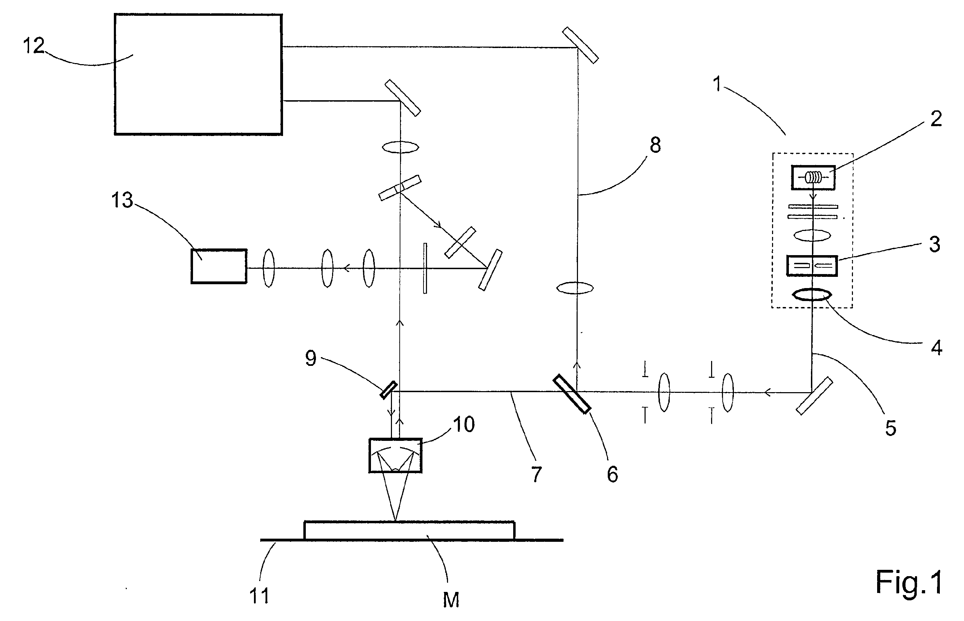

Die Erfindung wird im Folgenden beispielhaft anhand eines optischen Schichtdickenmeßgerätes erläutert, das in einer Fertigungslinie zur Halbleiterfabrikation eingesetzt werden kann, wo die dort produzierten Wafer zu kontrollieren sind. Die entsprechende Einrichtung ist schematisch in Fig.1 dargestellt.

Diese Einrichtung umfaßt eine Beleuchtungsvorrichtung 1, in der eine Halogenlampe 2 vorgesehen ist, deren Wendel in die Öffnung einer Deuteriumlampe 3, die ebenfalls Teil der Beleuchtungsvorrichtung 1 ist, abgebildet wird. Das von diesen beiden Lampen erzeugte Licht, das gegebenenfalls gefiltert wird, wird mit geeigneten Linsen 4 zu einem Beleuchtungsstrahlengang 5 gebündelt.

Der Beleuchtungsstrahlengang 5 erreicht über Spiegel, Linsen und Blenden, deren Anordnung in solchen Fällen dem Fachmann geläufig ist und deshalb hier nicht näher erläutert werden muß, einen Strahlteiler 6, beispielsweise einen halb durchlässigen Spiegel, und wird dort in einen Meßstrahlengang 7 und einen Referenzstrahlengang 8 verzweigt.

Der Referenzstrahlengang 8 wird, wiederum mit Hilfe geeignet angeordneter optischer Baugruppen wie Spiegel und Linsen, zu einer Untersuchungsvorrichtung, wie beispielsweise hier einem Spektralphotometer 12, geleitet. Der Meßstrahlengang 7 dagegen wird nach Richtungsänderung mittels Umlenkspiegel 9 durch ein Spiegelobjektiv 10 hindurch auf ein Meßobjekt M, hier einen Wafer, gerichtet, der auf einem Meßtisch 11 ruht.

Mit dem Meßstrahlengang 7 wird ein Zielgebiet des auf dem Meßtisch 11 angeordneten Meßobjektes M beleuchtet. Das dabei von dem Meßobjekt M in das Spiegelobjektiv 10 reflektierte Meßlicht wird nun ebenfalls dem Spektralphotometer 12 zugeführt, wo Meßlicht und Referenzlicht zwecks Auswertung spektral zerlegt und zeitgleich auf eine CCD-Matrix abgebildet werden. Die Methoden der Spektralphotometrie sind hinreichend bekannt, so daß sich eine diesbezügliche Erläuterung an dieser Stelle ebenfalls erübrigt.

Außerdem ist auch noch eine CCD-Kamera 13 vorgesehen, mit der das zu untersuchende Meßgebiet auf einem Monitor dargestellt werden kann, um so die Auswahl eines zu kontrollierenden Abschnittes an dem Meßobjekt M zu ermöglichen.

Im Spektralphotometer 12 werden nach Vergleich mit dem Referenzsignal die von der Objektabbildung stammenden Meßsignale normiert, womit der Einfluß eines Lampenrauschens reduziert und der Einfluß der Lampen auf das Spektrum kompensiert wird.

Da die später zu erläuternde Überwachung der Beleuchtungsvorrichtung 1 bzw. die Überwachung des von der Beleuchtungsvorrichtung 1 abgestrahlten Meßlichtes auf einer Kalibrierung des optischen Meßgerätes aufbaut, soll diese Kalibrierung hier zunächst anhand der Fig.1 kurz erläutert werden.

Bekannt ist, daß das im Spektralphotometer 12 zur Auswertung verfügbare Licht nicht nur durch das Meßobjekt M, sondern auch durch zahlreiche andere Faktoren beeinflußt wird, die sich ebenfalls in dessen Spektrum niederschlagen und die unerwünscht und demzufolge störend sind. Solche Störfaktoren sind beispielsweise Energieverluste, die spektrale Transparenz der verwendeten optischen Elemente, die spektrale Empfindlichkeit der Empfangssensoren und dergleichen.

Um nun eine zuverlässige Aussage über die Schichtdicke an dem Meßobjekt M zu ermöglichen, ist es erforderlich, den Einfluß dieser Faktoren möglichst auszuschalten bzw. daraus resultierende Fehler zu kompensieren. Bei dem in Fig.1 dargestellten Schichtdickenmeßgerät wird deshalb zunächst eine Messung mit einem Referenzkörper vorgenommen, dessen Spektralverteilung N(λ) bekannt ist. Dazu wird der Referenzkörper mit dem Meßstrahlengang 7 beleuchtet, die Spektralverteilung des von dem Referenzkörper reflektierten Lichtes erfaßt, das Ergebnis abgespeichert und für den weiteren Meßprozeß bereitgestellt. Durch einen Abgleich mit der an sich bekannten Spektralverteilung N(λ) können insbesondere die Störfaktoren kompensiert werden, die im Übertragungsweg vom Strahlteiler 6 bis zum Spektralphotometer 12 liegen.

Der Referenzkörper mit der bekannten Spektralverteilung N(λ) ist für eine schnelle Überprüfung jederzeit verfügbar und wird zu diesem Zweck auf dem Meßtisch 11 an einer vorbestimmten Stelle abgelegt. Weil durch Umwelteinflüsse bedingte Veränderungen der Apparatur eine periodische Kalibrierung notwendig machen, wird eine solche bei kontinuierlichem Betrieb der Einrichtung etwa nach jeweils vierundzwanzig Stunden vorgenommen.

Da sich aber weiterhin auch, wie eingangs bereits erläutert, das Abstrahlverhalten der Lampen und damit die Parameter des Beleuchtungslichtes mit der Zeit ändern, wird außerdem ein kontinuierlicher Abgleich des dem Spektralphotometer 12 zugeleiteten Meßlichtes mit dem Referenzlicht vorgenommen.

Zu diesem Zweck wird, vorzugsweise in wöchentlichen Abständen, eine weitere Kalibrierung des Spektralphotometers 12 mit Hilfe eines weiteren Referenzkörpers vorgenommen, der eine bekannte Schichtdicke aufweist.

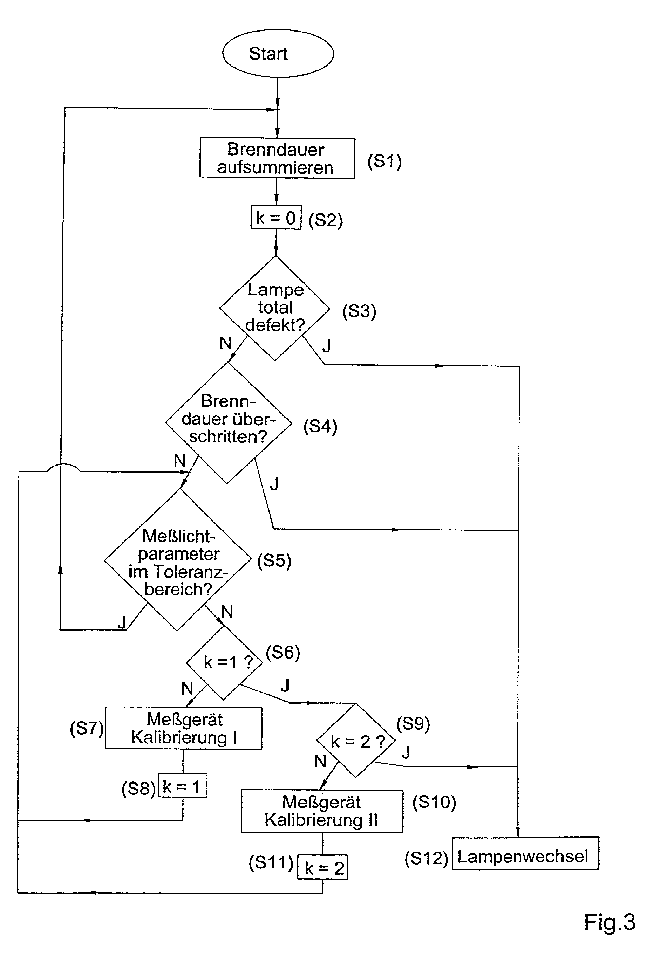

Der Ablauf der einzelnen Schritte zur Überwachung der Beleuchtungsvorrichtung 1 entspricht prinzipiell der umgekehrten Reihenfolge bei der Kalibrierung. Ein Ablaufplan einer solchen Meßlichtüberwachung ist in Fig.3 dargestellt.

Daraus geht hervor, daß nach Einschalten der Beleuchtungsvorrichtung 1 bzw. der verwendeten Lampen eine Registrierung und Aufsummierung der Brenndauer der Lampen beginnt, wobei bei einem vorübergehenden Ausschalten der Beleuchtungsvorrichtung 1 der bisher erreichte Wert zwischengespeichert wird.

Das Überwachungsprogramm läuft dabei im Hintergrund des Betriebes des Meßgerätes in der Art einer Endlosschleife ab. Wie aus Fig.3 zu erkennen ist, erfolgt in einem ersten Schritt S3 eine Überprüfung auf Ausfall einer Lampe. Sofern dieser festgestellt wird, wird unmittelbar ein Signal generiert, das zu einem Lampenwechsel auffordert bzw. im Falle einer automatischen Lampenwechselvorrichtung diesen gleich initiiert. Wird hingegen das Leuchten der Lampe festgestellt, so erfolgt in einem weiteren Schritt S4 eine Überprüfung im Hinblick auf die Lebensdauer der Lampe, die in dem Ablaufplan vorgegeben wird. Dabei ist es zweckmäßig, aus Sicherheitsgründen von der vom Hersteller garantierten Lebensdauer auszugehen, die üblicherweise unter einer durchschnittlichen Lebensdauer bzw. der maximalen Lebensdauer liegt und bei einer Xenonlampe oder Deuteriumlampe etwa 1000 Stunden, bei Halogenlampen etwa 2000 Stunden beträgt. Wird festgestellt, daß bei einem Aufsummieren der Brenndauer im Schritt S1 die vorgegebene Brenndauer erreicht worden ist, so wird wiederum ein Signal erzeugt, aufgrund dessen ein Lampenwechsel S12 ausgelöst wird.

Ist die vorgegebene Brenndauer noch nicht überschritten, so erfolgt eine Überprüfung des Beleuchtungslichtes hinsichtlich ausgewählter Parameter, wobei überprüft wird, ob diese in einem für die Meßqualität ausreichenden Toleranzbereich liegen (S5).

In dem dargestellten Ausführungsbeispiel werden hierzu die Helligkeit bzw. Intensität, die spektrale Verteilung sowie die Häufigkeit von Helligkeits- bzw. Intensitätsschwankungen erfaßt. Liegen diese im zulässigen Bereich, so springt das Ablaufprogramm wieder zu Schritt S1. Werden hingegen Abweichungen von dem zulässigen Toleranzbereich festgestellt, so erfolgt in einem weiteren Schritt S7 zunächst eine erneute Kalibrierung des optischen Meßgerätes mit dem Referenzkörper mit bekannter Spektralverteilung, um festzustellen, ob die Abweichungen durch den Alterungsprozeß der Lampen bedingt sind oder auf anderen Ursachen, beispielsweise in Veränderungen des Meßgerätes, beruhen.

Nach der Kalibrierung erfolgt eine erneute Überprüfung der Meßlichtparameter. Befinden sich diese nach der vorgenommen Kalibrierung wieder im zulässigen Bereich, so werden die bisher genutzten Lampen weiterhin verwendet. Wird hingegen nach wie vor eine Abweichung von den zulässigen Meßlichtparameterbereichen festgestellt, so erfolgt ein weiterer Kalibriervorgang S10. Durch das Setzen der Zähler in den Schritten S2, S8 und S11 sowie die Abfrage dieser Zähler in den Schritten S6 und S9 wird sichergestellt, daß das Ablaufprogramm nach den Kalibrierungen in den Schritten S7 und S10 bei einem Weiterbestehen der Meßlichtparameterabweichungen nicht in eine Endlosschleife verfällt, sondern vielmehr letztlich ein Lampenwechsel S12 ausgelöst wird.

Das zuvor beschriebene Ablaufprogramm stellt sicher, daß einerseits stets enge Toleranzbereiche der Meßlichtparameter um vorgegebene Sollwerte eingehalten werden können, andererseits die verwendeten Lampen lange genutzt werden können, so daß hierdurch der optimale Zeitpunkt für einen Lampenwechsel gefunden wird.

Der Lampenwechsel kann prinzipiell in beliebiger Art und Weise vorgenommen werden. Im Hinblick auf eine effiziente Serienfertigung soll jedoch die Wechselzeit möglichst kurz gehalten werden. In einer besonders günstigen Ausführungsvariante erfolgt daher der Lampenwechsel selbsttätig, indem eine mehrere Lampen aufnehmende Halterung, deren Lampen einzeln oder auch in Gruppen betrieben werden können, von einer Position, in der bestimmte Lampen an die Betriebsspannung geschlossen sind, in eine andere Schaltposition geschaltet wird, in der baugleiche andere Lampen brennen.

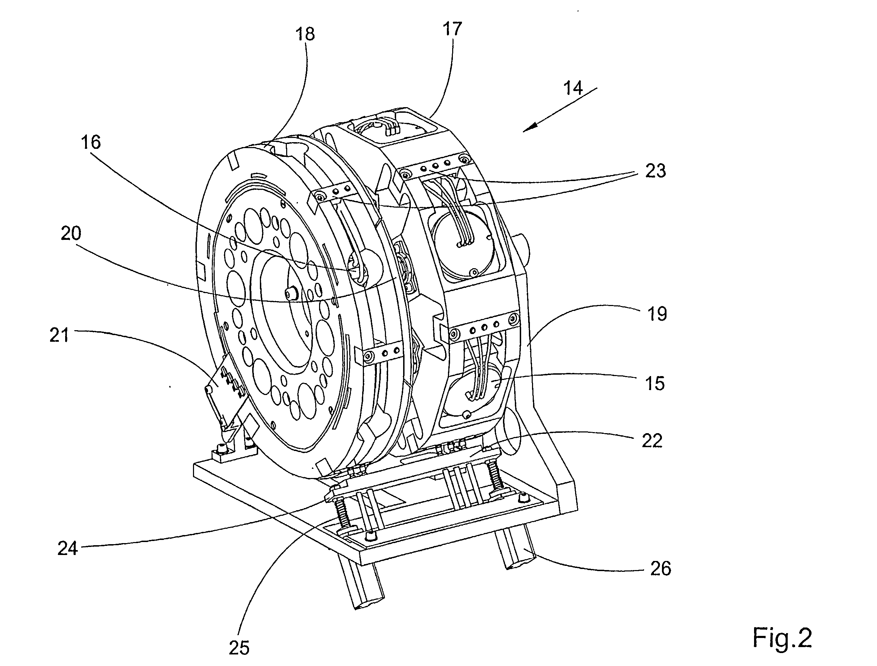

Hierzu wird bei dem Ausführungsbeispiel der in Fig.2 dargestellte Lampenwechsler 14 verwendet. Dieser ist für sechs Deuteriumlampen 15 und sechs Halogenlampen 16 ausgebildet, die jeweils nebeneinander in Trommeln 17 und 18 in Umfangsrichtung gleichbeabstandet verteilt angeordnet sind. Diese beiden Trommeln 17,18 sind miteinander verbunden und um eine gemeinsame Achse drehbar angeordnet.

Vorteilhafterweise befinden sich zwischen den Lampen Wärmeschutz- und/oder Graufilter (zeichnerisch nicht dargestellt). Zudem sind optische Einrichtungen vorgesehen, die eine Abbildung des Wendels der jeweiligen Halogenlampe 16 im Pinhole der Deuteriumlampe 15 erlauben (vgl. Erläuterung zu Fig.1).

Der Antrieb der Trommeln 17,18 erfolgt über einen nicht dargestellten Antriebsmotor gegenüber einem feststehenden Gehäuseteil 19. Vorzugsweise erfolgt die Übertragung der Drehbewegung von der Abtriebswelle des Motors auf die Trommeln 17,18 über einen Zahnriementrieb, wobei jedoch eine schaltbare mechanische Entkopplung vorgesehen ist, um eine genaue Postionierung der Trommeln 17, 18 in Umfangsrichtung zu ermöglichen. Dies kann beispielsweise durch eine Verrastung mittels eines Rastringes und geeignet angeordneten Federn verwirklicht werden, um sicherzustellen, daß sich die für den Betrieb ausgewählten Lampen in einer genau definierten Position befinden.

Wie in Fig.2 weiter angedeutet, wird eine Auswertung der Positionen der Lampen über eine Codescheibe 20 und einen zugehörigen Gabelkoppler vorgenommen. Die Feststellung eines jeweiligen Positionscodes, der jeweils einem bestimmten Lampenpaar entspricht, erfolgt beispielhaft über an der Trommel 18 angeordnete Spuren, die mit einem gehäuseseitig feststehend angeordneten Reflexkoppler 21 in der Betriebsstellung in Eingriff gelangen. Hiermit ist eine eindeutige Positionsbestimmung aller vorhandenen Lampenpaare möglich.

Um die elektrische Verschaltung zur Zuführung der Betriebsspannung zu den Lampen zu vereinfachen bzw. ein vieladriges Kabelbündel zu vermeiden, ist auf der Gehäuseseite eine elektrische Anschlußeinrichtung 22 vorgesehen, mit der die jeweils in Betriebsposition befindlichen Lampen verbunden sind. Hierzu sind die Trommeln 17,18 radial außenseitig jeweils mit elektrischen Anschlüssen für die betreffenden Lampen bzw. Lampengruppen - im gewählten Ausführungsbeispiel werden Lampenpaare verwendet - versehen.

Die elektrischen Anschlüsse befinden sich dabei im wesentlichen in parallel zur Drehachse verlaufenden Kontaktleisten 23, von denen aus dann eine elektrische Verbindung zu den einzelnen Lampen einer Lampengruppe hergestellt wird. Diese Kontaktleisten 23 gelangen mit einer in Bezug auf die Trommeln 17, 18 radial bewegbare Kontaktgegenleiste 24 der elektrischen Anschlußeinrichtung 22 in Eingriff. Letztere wird in einer Betriebsstellung über Federn 25 gegen eine der trommelseitigen Kontaktleisten 23 gedrückt.

Zur Ermöglichung eines Lampenwechsels sind an der elektrischen Anschlußvorrichtung 22 weiterhin Betätigungsorgane 26 vorgesehen, um die Kontaktgegenleiste 24 von den Trommeln 17,18 zeitweilig zurückziehen zu können. Im gewählten Ausführungsbeispiel werden hierzu zwei Pneumatikzylinder verwendet, wobei anstelle derselben auch hydraulische oder elektromagnetische Einrichtungen zum Zurückziehen der beweglichen Kontaktgegenleiste 24 eingesetzt werden können.

Ein Lampenwechsel wird immer dann ausgeführt, wenn ein entsprechendes Signal ausgelöst wird, beispielsweise wenn eine Lampe durchgebrannt ist, die zulässige Brenndauer erreicht ist, oder sich selbst bei einer Nachkalibrierung die erforderlichen Meßlichtparameter nicht mehr in den gewünschten Toleranzgrenzen halten lassen.

Hierzu erfolgt dann zunächst ein Zurückziehen der Kontaktgegenleiste 24 der elektrischen Anschlußeinrichtung 22, so daß die Trommeln 17,18 ungehindert um ihre Längsachse gedreht werden können, bis ein neues Lampenpaar in der Betriebsstellung einrastet. Durch die Betätigungsorgane 26 wird dann die Kontaktgegenleiste 24 über die Federn 25 gegen die aufgrund der Verrastung positionsrichtig liegende trommelseitige Kontaktleiste 23 der neuen Lampen gedrückt. Erst wenn alle Lampenpaare, die sich an dem Lampenwechsler 14 befinden, verbraucht sind, erfolgt ein Austausch der gesamten Baugruppe.

Nach einem durchgeführten Lampenwechsel wird zunächst eine Neukalibrierung in der oben beschriebenen Art und Weise vorgenommen. Lassen sich mit den neuen Lampen die vorgegebenen Toleranzbereiche der Meßlichtparameter nicht realisieren, kann umgehend ein erneuter Lampenwechsel ausgelöst werden. Zur Optimierung des Lampenwechsels wird eine Logikschaltung verwendet, die unter Berücksichtigung der Drehrichtung der Trommeln 17, 18 den kürzesten Stellweg ermittelt. Kurz vor Erreichen der Betriebsposition für die neuen Lampen wird die Drehzahl reduziert, um ein stabiles Einfahren in die Betriebsposition zu gewährleisten. Hierzu können wiederum der bereits erwähnten Reflexkoppler 21 sowie die Codescheibe 20 genutzt werden.

In einer speziellen Ausführungsform werden die Trommeln 17 und 18 separat voneinander angetrieben, so daß bei Ausfall einer Lampe an der einen Trommel die an der anderen Trommel gerade in Betrieb befindliche Lampe weiter verwendet werden kann. In einer weiteren gesonderten Ausführungsvariante wird der Lampenwechsler 14 mit einer einzigen Trommel ausgebildet, die entsprechend der Trommel 17 oder 18 gestaltet werden kann und beispielsweise mit Xenonlampen bestückt ist.

Zur Bewertung der Lampenfunktion wird beispielhaft separat für jeden Lampentyp an der entsprechenden Trommel oder auch in unmittelbarer Umgebung zu der diesen umgebenden Gehäuse der Beleuchtungsvorrichtung ein optischer Sensor montiert, der unter Berücksichtigung eines definierten Schwellwertes ein Signal "Lampe leuchtet" liefert. Dieses Signal steuert einen Betriebsstundenzähler der die in Fig.3 in Schritt S1 dargestellte Registrierung der Brennzeit der Lampe vornimmt.

Bei einem Totalausfall einer oder aller Lampen wird ein Lampenwechsel sofort und automatisch eingeleitet. Der gerade in Gange befindliche Meßjob kann an der Abbruchstelle dann ohne weiteres fortgesetzt werden. Beim Erreichen der maximalen Lebensdauer der Lampe oder bei Feststellung einer Abweichung aus den Toleranzbereichen der Meßlichtparameter in Schritt S5 wird der automatische Lampenwechsel von einem Softwaremodul solchermaßen organisiert, daß der Lampenwechsel in einen Wait-Zustand der Einrichtung verlegt wird. Über den bevorstehenden Lampenwechsel bzw. eine vorzunehmende Kalibrierung wird ein Operator informiert, der Einfluß auf den konkreten Zeitpunkt des Wechsels nehmen kann.

### Bezugszeichenliste

- 1: Beleuchtungsvorrichtung
- 2: Halogenlampe
- 3: Deuteriumlampe
- 4: Linsen
- 5: Beleuchtungsstrahlengang
- 6: Strahlteiler
- 7: Meßstrahlengang
- 8: Referenzstrahlengang
- 9: Umlenkspiegel
- 10: Spiegelobjektiv
- 11: Meßtisch
- 12: Spektalphotometer
- 13: CCD-Kamera
- 14: Lampenwechsler
- 15: Deuteriumlampe
- 16: Halogenlampe
- 17, 18: Trommeln
- 19: Gehäuseteil
- 20: Codescheibe
- 21: Reflexkoppler
- 22: Anschlußeinrichtung
- 23,24: Kontaktleisten
- 25: Federn
- 26: Betätigungsorgane
- M: Meßobjekt

## Patentansprüche

1. Verfahren zur Überwachung des von einer Beleuchtungsvorrichtung abgestrahlten Lichts für ein optisches Messgerät, **gekennzeichnet durch** die folgenden Schritte:
- Versehen der Beleuchtungsvorrichtung mit mehreren Lampen, die einzeln oder in Gruppen ein-, bzw. ausgeschaltet werden,
- dass fortlaufend und/oder zeitweise Lampen - und Messlichtparameter erfasst werden, wobei die Messlichtparameter die Helligkeit des Messlichts, dessen Spektralverteilung und die Häufigkeit von Helligkeitsschwankungen sind,
- dass für die jeweiligen Parameter Sollwerte vorgegeben werden,
- dass in einer Vergleichseinrichtung, die bei einem Abweichen eines oder mehrerer der erfassten Lampen-/Messlichtparameter von den entsprechenden Sollwerten, ein die Abweichung repräsentierendes Signal erzeugt wird,
- dass eine Ansteuerschaltung dieses Signal empfängt, wobei die Ansteuerschaltung mit einem drehbaren Lampenträger verbunden ist, der aus mindestens einer Trommel (17, 18) besteht, an deren Umfang in radialsymmetrischen Abständen die Lampen (15, 16) angeordnet sind, wobei Kontakte im radialen Eingriff mit mindestens einer dieser Lampe stehen und jede Trommel (17, 18) mit einem Antrieb gekoppelt ist, der in Abhängigkeit von dem Signal deren Drehung soweit veranlasst, bis die Kontakte im radialen Eingriff mit mindestens einer dieser Lampe stehen, wobei die Lampe gewechselt ist und dann in Kontakt mit einer ein- und ausschaltbaren Betriebsspannungsquelle ist.

2. Verfahren nach Anspruch 1, **dadurch gekennzeichnet, dass** die Brenndauer der jeweiligen Lampen aufsummiert und das Erreichen einer vorgegebenen Brenndauer signalisiert wird, woraufhin ein Wechsel der Lampen, bzw. Lampengruppen vorgenommen wird.

3. Verfahren nach einem der Ansprüche 1 bis 2, **dadurch gekennzeichnet, dass** die Beleuchtungsvorrichtung fortlaufend auf den Ausfall einer Lampe überwacht wird, und wobei das Auftreten eines Ausfalls einer Lampe signalisiert wird, woraufhin ein Wechsel der Lampe, bzw. Lampengruppe vorgenommen wird.

4. Verfahren nach einem der Ansprüche 1 bis 3, **dadurch gekennzeichnet, dass** nach dem Signalisieren einer Messlichtparameterabweichung eine Kontrollmessung vorgenommen wird, für die zunächst eine Kalibrierung mit dem optischen Messgerät erfolgt, und ein Wechsel der Lampe, bzw. Lampen nur dann vorgenommen wird, wenn nach der Kalibrierung weiterhin eine unzulässige Abweichung von einem oder mehreren Sollwerten signalisiert wird.

5. Verfahren nach Anspruch 4, **dadurch gekennzeichnet, dass** während des Kalibriervorgangs ein Abgleich eines an sich bekannten Spektrums eines Referenzkörpers mit einen von dem Referenzkörper beeinflussten Messlichtspektrums erfolgt und ein Wechsel der Lampe, bzw. Lampengruppe nur dann vorgenommen wird, wenn weiterhin eine unzulässige Abweichung von einem oder mehreren Sollwerten signalisiert wird.

6. Beleuchtungsvorrichtung für ein optisches Messgerät, **dadurch gekennzeichnet, dass**
- mehrere als Messlichtquelle dienende Lampen vorgesehen sind, von denen mindestens eine zur Ausübung der Messaufgabe dient, während die übrigen Lampen als Lampenvorrat dienen,
- eine Einrichtung zur fortlaufenden und/oder zeitweise Erfassung von Lampen- und Messlichtparametern vorgesehen ist, wobei die Messlichtparameter die Helligkeit des Messlichts, dessen Spektralverteilung und die Häufigkeit von Helligkeitsschwankungen darstellen,
- eine Einrichtung zur Vorgabe von den jeweiligen Messlichtparametern zugeordneten Sollwerten vorgesehen ist,
- eine Vergleichseinrichtung vorgesehen ist, die bei einem Abweichen eines oder mehrerer der erfassten Lampen-/Messlichtparameter von den entsprechenden Sollwerten ein die Abweichung repräsentierendes Signal erzeugt und
- eine Ansteuerschaltung dieses Signal empfängt, wobei die Ansteuerschaltung mit einem drehbaren Lampenträger verbunden ist, der aus mindestens einer Trommel (17,18) besteht, an deren Umfang in radialsymmetrischen Abständen die Lampen (15,16) angeordnet sind, die Kontakte im radialen Eingriff mit mindestens einer dieser Lampe stehen und jede Trommel (17,18) mit einem Antrieb gekoppelt ist, der in Abhängigkeit von dem Signal deren Drehung soweit veranlasst, bis die mit den Kontakten in Eingriff stehende Lampe (15,16) gewechselt ist und eine andere Lampe in Kontakt mit einer ein- und ausschaltbaren Betriebsspannungsquelle ist.

7. Beleuchtungsvorrichtung nach Anspruch 6, **dadurch gekennzeichnet**, das die Kontakte auf trommelseitigen Kontaktleisten (23) einerseits und gestellseitigen Kontaktleisten (24) andererseits angeordnet sind und die gestellseitigen Kontaktleisten (24) mit Betätigungsorganen (26) gekoppelt sind.

8. Beleuchtungsvorrichtung nach Anspruch 6, **dadurch gekennzeichnet, dass** das optische Messgerät ein Schichtdickenmessgerät ist.

## Claims

1. A method for monitoring the light emitted by an illumination device for an optical measuring instrument, **characterised by** the following steps:
- providing the illumination device with a plurality of lamps, which are switched on or off individually or in groups,
- in that continuously and/or periodically lamp and measurement light parameters are detected, the measurement light parameters being the brightness of the measurement light, its spectral distribution and the frequency of brightness fluctuations,
- in that desired values are set for the respective parameters,
- in that, on deviation of one or more of the detected lamp/measurement light parameters from the corresponding desired values, a signal representing the deviation is generated in a comparator,
- in that a control circuit receives this signal, the control circuit being connected to a rotatable lamp holder, which consists of at least one drum (17, 18), at the circumference of which the lamps (15, 16) are arranged with radially symmetrical spacing, contacts being in radial engagement with at least one of these lamps and each drum (17, 18) being coupled to a drive which, as a function of the signal, brings about rotation thereof until the contacts are in radial engagement with at least one of these lamps, the lamp being changed and then being in contact with an operating voltage source which may be switched on and off.

2. The method according to claim 1, **characterised in that** the burning life of the respective lamps is added together and signalling takes place when a given burning life is reached, whereupon the lamps or lamp groups are changed.

3. The method according to one of claims 1 to 2, **characterised in that** the illumination device is monitored continuously for failure of a lamp, and the occurrence of failure of a lamp being signalled, whereupon the lamp or lamp group is changed.

4. The method according to one of claims 1 to 3, **characterised in that**, after signalling of a measurement light parameter deviation, a control measurement is performed, for which first of all calibration is effected with the optical measuring instrument, and the lamp or lamps are only changed when an inadmissible deviation from one or more desired values is still signalled after calibration.

5. The method according to claim 4, **characterised in that**, during the calibration process, a per se known spectrum of a reference body is compared with a measurement light spectrum influenced by the reference body and the lamp or lamp group is only changed when an inadmissible deviation from one or more desired values is still signalled.

6. An illumination device for an optical measuring instrument, **characterised in that**
- a plurality of lamps serving as a measurement light source are provided, of which at least one serves to perform the measuring task, while the other lamps serve as a lamp store,
- a means is provided for continuous and/or periodic detection of lamp and measurement light parameters, the measurement light parameters being the brightness of the measurement light, its spectral distribution and the frequency of brightness fluctuations,
- a means is provided for setting desired values assigned to the respective measurement light parameters,
- a comparator is provided which, on deviation of one or more of the detected lamp/measurement light parameters from the corresponding desired values, generates a signal representing the deviation,
- a control circuit receives this signal, the control circuit being connected to a rotatable lamp holder, which consists of at least one drum (17, 18), at the circumference of which the lamps (15, 16) are arranged with radially symmetrical spacing, the contacts are in radial engagement with at least one of these lamps and each drum (17, 18) is coupled to a drive which, as a function of the signal, brings about rotation thereof until the lamp (15, 16) in engagement with the contacts has been changed and another lamp is in contact with an operating voltage source which may be switched on and off.

7. The illumination device according to claim 6, **characterised in that** the contacts are arranged on drum-side contact strips (23) on the one hand and on frame-side contact strips (24) on the other hand and the frame-side contact strips (24) are coupled to actuating members (26).

8. The illumination device according to claim 6, **characterised in that** the optical measuring instrument is a film thickness measuring instrument.

## Revendications

1. Procédé pour la surveillance de la lumière rayonnée par un dispositif d'éclairage pour un appareil de mesure optique, **caractérisé par** les étapes suivantes :
- doter le dispositif d'éclairage de plusieurs lampes qui peuvent être allumées et éteintes individuellement ou en groupes,
- en ce que des paramètres de lampe et de lumière de mesure sont détectés continuellement et/ou temporairement, étant donné que les paramètres de lumière de mesure sont la luminance de la lumière de mesure, sa distribution spectrale et la fréquence de variations de luminance,
- en ce que les valeurs de consigne sont prédéfinies pour les différents paramètres,
- en ce que, dans un organe comparateur, en cas de divergence de l'un ou de plusieurs des paramètres de lampe / de lumière de mesure détectés des valeurs de consigne correspondantes, un signal représentant la divergence est généré,
- en ce qu'un circuit d'excitation reçoit ce signal, étant donné que le circuit d'excitation est relié à un support de lampes rotatif qui se compose d'au moins d'un tambour (17, 18) sur le pourtour duquel sont disposées les lampes (15, 16) à des écartements radialement symétriques, étant donné que des contacts sont en prise radiale avec au moins une de ces lampes et chaque tambour (17, 18) est couplé à un mécanisme d'entraînement qui, en fonction du signal, provoque sa rotation jusqu'à ce que les contacts soient en prise radiale avec au moins une de ces lampes, étant donné que la lampe est remplacée, puis en contact avec une source de tension de service pouvant être activée et désactivée.

2. Procédé selon la revendication 1, **caractérisé en ce que** la durée d'allumage de chaque lampe est additionnée et l'atteinte d'une durée d'allumage prédéfinie est signalisé, ce sur quoi on procède au remplacement des lampes ou groupes de lampes.

3. Procédé selon l'une quelconque des revendications 1 à 2, **caractérisé en ce que** le dispositif d'éclairage est surveillé continuellement afin de détecter la défaillance d'une lampe, et dans lequel la défaillance effective d'une lampe est signalée, ce sur quoi un remplacement de la lampe ou du groupe de lampes a lieu.

4. Procédé selon l'une quelconque des revendications 1 à 3, **caractérisé en ce que**, après la signalisation d'une divergence des paramètres de lumière de mesure, une mesure de contrôle est effectuée, mesure pour laquelle on réalise tout d'abord un calibrage avec l'appareil de mesure optique, et la lampe ou les lampes ne sont remplacées que si, après le calibrage, une divergence inadmissible de l'une ou de plusieurs des valeurs de consigne est signalée.

5. Procédé selon la revendication 4, **caractérisé en ce que**, pendant le calibrage, un spectre en fait connu d'un corps de référence est comparé avec un spectre de lumière de mesure influencé par le corps de référence et on ne procède au remplacement de la lampe ou du groupe de lampes que si une divergence inadmissible de l'une ou de plusieurs des valeurs de consigne est encore signalée.

6. Dispositif d'éclairage pour un appareil de mesure optique, **caractérisé en ce que**
- plusieurs lampes servant de source de lumière de mesure sont prévues, lampes dont au moins une sert à accomplir la tâche de mesure pendant que les autres lampes servent de lampes de réserve,
- un équipement est prévu pour la saisie continue et/ou temporaire de paramètres de lampes et de lumière de mesure, étant donné que les paramètres de lumière de mesure représentent la luminance de la lumière de mesure, sa distribution spectrale et la fréquence de variations de luminance,
- un équipement est prévu pour la définition de valeurs de consigne affectées aux différents paramètres de lumière de mesure,
- un organe comparateur qui, en cas de divergence de l'un ou de plusieurs des paramètres de lampe / de lumière de mesure saisis des valeurs de consigne correspondantes, génère un signal représentant la divergence est prévu, et
- un circuit d'excitation reçoit ce signal, étant donné que le circuit d'excitation est relié à un support de lampes rotatif qui se compose au moins d'un tambour (17, 18) sur le pourtour duquel sont disposées les lampes (15, 16) à des écartements radialement symétriques, les contacts sont en prise radiale avec au moins une de ces lampes et chaque tambour (17, 18) est couplé à un mécanisme d'entraînement qui, en fonction du signal, provoque sa rotation jusqu'à ce que la lampe (15, 16) en prise avec les contacts est remplacée, et une autre lampe est en contact avec une source de tension de service pouvant être activée et désactivée.

7. Dispositif d'éclairage selon la revendication 6, **caractérisé en ce que** les contacts sont disposés sur des barrettes de contacts (23) côté tambour d'une part et des barrettes de contacts (24) côté châssis d'autre part, et les barrettes de contacts (24) côté châssis sont couplées à des organes d'actionnement (26).

8. Dispositif d'éclairage selon la revendication 6, **caractérisé en ce que** l'appareil de mesure optique est un appareil de mesure d'épaisseur de couche.
